(19) Europäisches Patentamt
European Patent Office
Office européen des brevets

(11) Numéro de publication: **0 510 482 A1**

# (12) DEMANDE DE BREVET EUROPEEN

(21) Numéro de dépôt: **92106371.5**

(22) Date de dépôt: **13.04.92**

(51) Int. Cl.5: **G06F 12/06**

(30) Priorité: **19.04.91 FR 9104856**

(43) Date de publication de la demande:
**28.10.92 Bulletin 92/44**

(84) Etats contractants désignés:
**AT BE CH DE DK ES FR GB IT LI NL SE**

(71) Demandeur: **ALCATEL BUSINESS SYSTEMS**
**12, rue de la Baume**
**F-75008 Paris(FR)**

(72) Inventeur: **Fleurette, Thierry**
**79, rue du Général Leclerc**
**F-67115 Plobsheim(FR)**
Inventeur: **Fenet, Xavier**
**77, rue des Charmilles**
**F-67400 Illkirch Graffenstaden(FR)**

(74) Mandataire: **Weinmiller, Jürgen et al**
**Lennéstrasse 9 Postfach 24**
**W-8133 Feldafing(DE)**

(54) **Procédé et dispositif d'adressage de périphériques pour le partage d'un canal de transmission de données entre les périphériques.**

(57) Le domaine de l'invention est celui des procédés et dispositifs d'adressage de périphériques. Plus précisément, la présente invention concerne un procédé et dispositif d'adressage multiplexé temporellement pour le partage d'un canal de transmission entre un certain nombre de périphériques, s'appliquant notamment dans le domaine des communications téléphoniques et/ou de données.

Selon l'invention, le procédé d'adressage de périphériques est du type consistant à générer un signal d'adressage destiné à adresser au moins un périphérique, le signal d'adressage étant généré par une unité de gestion pilotant les périphériques, et consiste à attribuer, lors d'une phase de programmation, un numéro distinct à chaque périphérique (In) correspondant à un rang déterminé d'intervalles de temps composant ledit signal d'adressage et à adresser, lors d'une phase d'adressage, les périphériques (In) dont les numéros correspondent respectivement à des créneaux temporels activés du signal d'adressage (Sn).

**FIG. 2**

EP 0 510 482 A1

Le domaine de l'invention est celui des procédés et dispositifs d'adressage de périphériques. Plus précisément, la présente invention concerne un procédé et dispositif d'adressage multiplexé temporellement pour le partage d'un canal de transmission entre un certain nombre de périphériques, s'appliquant notamment dans le domaine des communications téléphoniques et/ou de données.

De façon connue, l'adressage d'un périphérique par une unité de gestion, par exemple par un microprocesseur, peut être effectué de trois différentes manières.

La première, la plus couramment employée, consiste à distribuer un bus d'adresse sur chaque périphérique. L'unité de gestion envoie sur ce bus l'adresse du périphérique qui sera concerné par les données circulant sur le bus de données. Chaque périphérique possède alors localement ses propres moyens de décodage d'adresse, typiquement des portes logiques, qui déterminent si le périphérique correspondant est ou non adressé.

Cette structure d'adressage est coûteuse en liaisons, en moyens de décodage, et présente un encombrement important dû à la taille du bus et à l'emplacement occupé par les moyens de décodage. Les possibilités d'extension d'un tel adressage sont de plus réduites, car il n'est pas aisé de rajouter un grand nombre de périphériques à ceux déjà existants, pour des raisons de charge en courant du bus. Enfin, il n'est pas possible d'adresser avec une telle structure simultanément plus d'un périphérique. Pour cela, il faut effectuer des adressages successifs, coûteux en temps.

Le second système d'adressage consiste à fournir à chaque périphérique un fil d'adresse. L'adressage d'un périphérique est alors réalisé en modifiant l'état logique de la ligne, par exemple en générant un niveau logique haut sur la ligne. Typiquement, ce niveau logique correspond à un "Chip Select". Cette structure demande cependant également un nombre important de fils, ce nombre augmentant avec le nombre de périphériques.

Le troisième système d'adressage consiste à supprimer le bus d'adresse et à adresser un périphérique par le bus de données, avant d'envoyer des données. Cette structure correspond à celle d'un bus de type Ethernet où les messages transmis sont sous forme de paquets.

Chaque paquet comprend, dans l'ordre de transmission, une entête indiquant notamment la destination des données, les données à transmettre et une indication de fin de paquet avec éventuellement un code de redondance cyclique (CRC). Ce type d'adressage nécessite cependant la gestion d'un protocole sur le canal de transmission. Il n'est pas non plus aisé d'adresser simultanément n périphériques quelconques.

La présente invention a notamment pour objectif de pallier ces inconvénients.

Plus précisément, un des objectifs de la présente invention est de fournir un dispositif et un procédé d'adressage de périphériques qui ne nécessite pas de gestion de protocole sur le canal de transmission et qui libère totalement le canal de transmission pour les données.

Un autre objectif de la présente invention est de fournir un tel dispositif qui ne présente qu'une structure réduite et facilite ainsi le câblage.

Un objectif supplémentaire de l'invention est de permettre un adressage simultané de plusieurs périphériques. Le dispositif pourrait ainsi fonctionner en mode multi-adressage.

Un objectif complémentaire de l'invention est de réaliser à l'aide d'un tel procédé et dispositif une communication entre un PABX et des cartes d'interface PABX-terminal téléphonique, pouvant être adapté à des dispositifs autocommutateurs déjà existants sans remettre en cause les éléments d'origine.

Ces objectifs, ainsi que d'autres qui apparaîtront par la suite, sont atteints grâce à procédé d'adressage de périphériques du type consistant à générer un signal d'adressage destiné à adresser au moins un périphérique, le signal d'adressage étant généré par une unité de gestion pilotant les périphériques, ledit procédé consistant à attribuer, lors d'une phase de programmation, un numéro distinct à chaque interface correspondant à un rang déterminé d'intervalle de temps composant ledit signal d'adressage, et à adresser, lors d'une phase d'adressage, les périphériques dont les numéros correspondent respectivement à des créneaux temporels activés du signal d'adressage.

Selon un mode de réalisation préférentiel, les périphériques sont validés pendant la durée d'une trame suivant la trame pendant laquelle ils ont été adressés.

L'invention concerne également un dispositif d'adressage mettant en oeuvre un tel procédé, le dispositif comprenant un fil d'adresse unique relié entre l'unité de gestion et chacun des périphériques, le fil conducteur unique véhiculant le signal d'adressage.

Selon une application préférentielle, les périphériques sont des interfaces entre un canal de transmission de données commun aux interfaces et des terminaux.

Avantageusement, les terminaux sont des terminaux téléphoniques et/ou télématiques.

Préférentiellement, chacun des périphériques comprend des moyens de comparaison d'un signal d'horloge de référence avec le signal d'adressage, les moyens de comparaison générant un signal de validation lorsque le signal d'adressage comporte un intervalle de temps activé correspondant au numéro programmé.

D'autres caractéristiques apparaîtront à la lecture de la description suivante d'un mode de réalisation préférentiel de l'invention, donné à titre illustratif et non limitatif, et des figures annexées dans lesquelles :

- la figure 1 est un schéma synoptique du dispositif selon la présente invention;
- la figure 2 est un chronogramme illustrant une phase d'écriture de l'unité de gestion vers un, puis deux périphériques;
- la figure 3 est un chronogramme illustrant une phase de lecture de l'unité de gestion de données provenant d'un périphérique;
- la figure 4 est un schéma synoptique d'un mode de réalisation de l'unité de gestion;
- la figure 5 est un schéma synoptique d'un mode de réalisation d'un périphérique constitué par une interface entre un canal de transmission et un poste téléphonique.

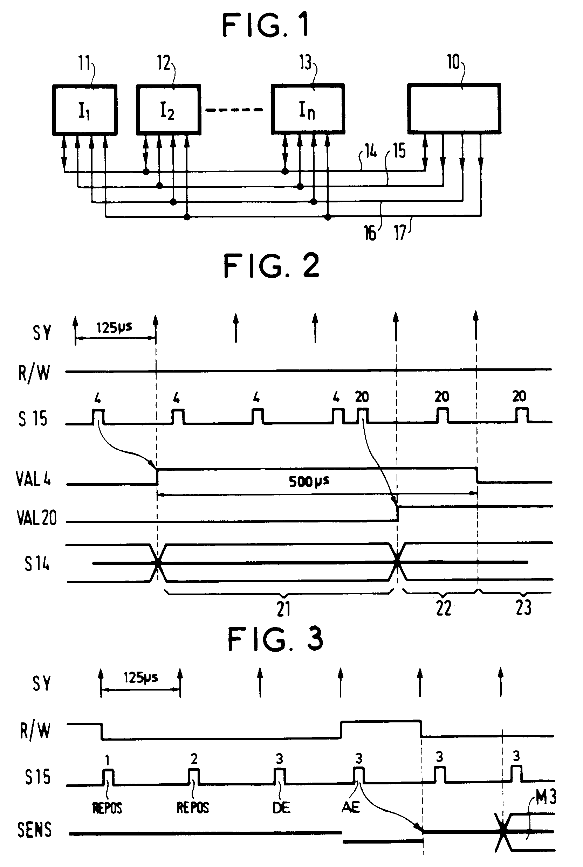

La figure 1 est un schéma synoptique du dispositif selon la présente invention.

Le dispositif comprend une unité 10 de gestion communiquant avec des périphériques 11, 12, 13 respectivement appelés $I_1, I_2, I_n$. Le nombre n de périphériques a été volontairement limité à trois dans cette figure pour des raisons de clarté mais le nombre n n'est en théorie pas limité. L'unité de gestion 10 est le maître unique, alors que les périphériques $I_1$, $I_2$ $I_n$ sont les esclaves.

Chaque périphérique est raccordé à l'unité de gestion 10 par quatre liaisons 14, 15, 16, 17.

La liaison 14 est un canal de transmissions de données bidirectionnel. Selon une application préférentielle de l'invention, les périphériques $I_1$, $I_2$, et $I_n$ sont des périphériques entre le canal de transmission 14 et des postes téléphoniques et/ou télématiques non représentés. Dans le cas de la figure 1, le dispositif de la figure 1 est par exemple situé dans un autocommutateur privé du type PABX. La liaison 14 est alors organisée en intervalles de temps.

La liaison 15 est constituée, selon l'invention, par un fil unique destiné à véhiculer une information d'adressage, comme il sera décrit par la suite en regard de la figure 2.

La liaison 16 est également constituée par un fil unique véhiculant un signal de lecture/écriture.

La liaison 17 véhicule un signal d'horloge bit et un signal d'horloge trame.

Selon un mode de réalisation de l'invention, l'horloge bit a une fréquence de 2,048 MHz et l'horloge trame une fréquence de 8 KHz. Ce mode de réalisation correspond à un adressage à l'aide d'une trame de type MIC comme il sera expliqué par la suite.

Les échanges de données entre l'unité de gestion 10 et les interfaces $I_1$, $I_2$, $I_n$ se font de point à multipoint dans le sens maître vers esclave (de 1 à n destinataires) sans aucun protocole.

La figure 2 est un chronogramme illustrant une phase d'écriture de l'unité de gestion vers un puis deux périphériques.

Ce chronogramme comprend les signaux suivants :

le signal SY est le signal d'horloge trame encore appelé signal de synchronisation trame. Il a une fréquence de 8 KHz et deux tops de synchronisation sont donc séparés de 125 $\mu$s.

Le signal RW est le signal de lecture/écriture. Dans le cas de la figure 2, ce signal est dans une phase d'écriture.

Le signal S15 est un signal d'adressage véhiculé sur la liaison 15 (figure 1) d'adressage.

Les signaux VAL 4 et VAL 20 correspondent respectivement à la validation des interfaces 4 et 20, comme il sera expliqué par la suite.

Le signal S14 est un signal numérique véhiculé par le canal 14 de transmission de données.

Le procédé d'adressage est le suivant : à l'initialisation du système, chaque interface est programmée avec un numéro de créneau temporel unique qui permet de générer une fenêtre de validation lorsque l'unité de gestion positionne ce même numéro sur le signal d'adressage, pendant une phase d'adressage. Chaque phase d'adressage a selon un mode de réalisation préférentiel, une durée de 125 $\mu$s.

Celle-ci est subdivisée, selon un mode de réalisation, en 32 intervalles de temps égaux. En positionnant à l'état actif ou inactif chacun de ces 32 intervalles de temps, il est possible d'adresser entre 0 et 32 interfaces à chaque phase d'adressage.

Dans la figure 2, le signal d'adressage S15 positionne son quatrième intervalle de temps à l'état actif. Ce positionnement est par exemple réalisé en mettant à l'état "1" les huit bits du quatrième intervalle de temps. L'interface qui a été programmée lors de la phase d'initialisation avec le numéro 4 détecte cet état actif et se tient prête à recevoir des données. Cette interface est appelée I4. A la trame suivante, le signal VAL4 interne à l'interface I4 est automatiquement activé pendant la durée d'une trame. L'unité de gestion 10 génère alors sur le canal de transmission 14 de données destinées à I4 (signal S14). Dans le mode d'adressage de la figure 2, l'interface I4 est maintenue active pendant quatre trames successives, soit 500 $\mu$s.

Pendant la quatrième période d'adressage, l'interface I20 est également adressée par l'unité de gestion 10, c'est-à-dire que le vingtième intervalle de temps du signal d'adressage S15 est activé. L'interface I20 est alors activée à partir du début de la cinquième trame du signal S15. La cinquième trame d'adressage ne comprend cependant plus de quatrième intervalle de temps actif et l'interface I4 est désactivé à la fin de la cinquième trame.

Si l'on considère que le signal de données S14 est partagé en trois périodes de temps 21, 22, 23 tel que représenté, la période 21 du signal S14 est reçue par l'interface I4, la période 22 par les interfaces I4 et I20 et la période 23 par l'interface I20 uniquement.

Le procédé de l'invention permet donc d'adresser simultanément et sélectivement autant d'interfaces qu'il y a d'intervalles de temps dans une trame du signal d'adressage.

L'adressage réalisé présente notamment l'avantage de ne comporter aucun protocole. Cet adressage permet d'écrire dans une interface mais également de lire des données provenant des interfaces.

La figure 3 est un chronogramme illustrant une phase de lecture de l'unité de gestion de données provenant d'un périphérique.

La lecture des données provenant d'une interface suppose la mise en place d'un protocole destiné à détecter l'interface voulant émettre. Ce protocole consiste à interroger cycliquement les interfaces pour reconnaître celle qui désire émettre un message vers l'unité de gestion 10.

Le sens de propagation des données est représenté par la variable SENS. Lorsqu'elle est à l'état haut, la transmission a lieu d'une interface vers l'unité de gestion 10 alors qu'un état bas signifie une transmission des données de l'unité de gestion 10 vers une interface.

Sur l'exemple de la figure 3, l'unité de gestion 10 passe en mode lecture au début d'une trame du signal SY et adresse successivement les interfaces 1 à n.

L'adressage consiste à valider l'intervalle de temps d'une trame du signal d'adressage, les intervalles de temps successifs de trames successives étant validés. Lorsque le premier intervalle de temps de la première trame est activé, l'interface I1 émet un code REPOS signalant à l'unité de gestion 10 qu'elle n'a aucun message à envoyer. L'unité de gestion adresse alors, par activation du deuxième intervalle de temps d'une seconde trame, l'interface I2. Celle-ci envoie également un code REPOS par le canal de transmission 14 à l'unité de gestion 10. Les décalages d'une trame entre l'adressage d'une interface et sa validation ne sont pas représentées pour des raisons de facilité de compréhension.

Lors d'une troisième trame d'adressage pointant l'interface I3, celle-ci envoie à l'unité de gestion 10 un code DE signifiant Demande à Emettre.

L'unité de gestion 10 interrompt alors la scrutation des interfaces et passe en mode écriture au début de la quatrième trame. Elle adresse l'interface I3 et lui envoie un code AE signifiant Autorisation à Emettre.

L'unité de gestion 10 passe alors en mode lecture et le code AE est lu par l'interface I3 (cinquième trame). L'interface I3 étant toujours adressée, celle-ci envoie alors son message M3 à l'unité de gestion 10.

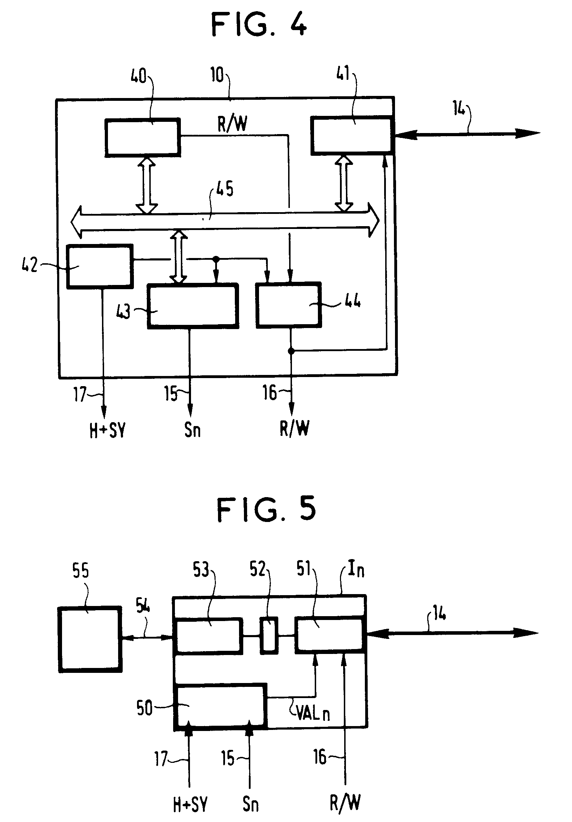

La figure 4 est un schéma synoptique d'un mode de réalisation de l'unité de gestion.

L'unité de gestion 10 comprend un microprocesseur 40, un émetteur-récepteur 41, une horlogerie 42, un compteur-comparateur 43 et des moyens de synchronisation 44.

Le microprocesseur 40 dialogue avec l'émetteur-récepteur 41 et le compteur-comparateur 43 à l'aide d'un bus interne 45. Il est piloté par l'horlogerie 42 qui permet d'obtenir le signal d'horloge bit H et l'horloge trame SY. H et SY permettent à l'unité de gestion 10 de piloter de façon synchrone les interfaces In. Le microprocesseur 40 définit l'interface In à sélectionner et transmet le numéro de l'interface au compteur-comparateur 43 qui génère le signal d'adresse Sn. Le compteur-comparateur 43 découpe le signal trame de durée 125 $\mu$s en 32 intervalles de temps égaux, chaque intervalle de temps étant également partagé en 8 zones.

Les 8 zones d'un intervalle de temps sont mises à l'état logique "1" pour l'adressage d'une interface. Au niveau de l'interface, une comparaison entre H, SY et le signal d'adressage Sn permet de déterminer si l'interface est ou non adressée. Les moyens de synchronisation 44 génèrent, à partir d'un signal R/W provenant du microprocesseur 40, le signal de lecture-écriture R/W synchronisé avec l'horloge trame SY. Les données présentes sur le canal de transmission 14 sont aiguillées vers le microprocesseur 40 grâce à l'émetteur-récepteur 41 en fonction du signal R/W synchronisé avec SY.

L'unité de gestion 10 gère la scrutation cyclique des interfaces In lorsque des messages de données peuvent provenir des interfaces.

La figure 5 est un schéma synoptique d'un mode de réalisation d'un périphérique constitué par une interface entre un canal de transmission et un poste téléphonique et/ou télématique.

Chaque interface In comprend un compteur-comparateur 50, un émetteur-récepteur 51, un buffer 52 et une interface de ligne 53.

Les interfaces In comprennent également des moyens de gestion non représentés.

Le compteur-comparateur 50 compare les signaux H, SY, et Sn et valide l'émetteur-récepteur 51, avec un retard d'une trame, si l'intervalle de temps correspondant au numéro de créneau temporel affecté à l'interface est activé. La comparaison effectuée correspond à un échantillonnage du signal d'adressage, l'échantillonnage étant effectué lorsque l'intervalle de temps programmé est atteint.

L'échantillonnage réalisé au niveau de l'interface permet de décoder simplement le signal d'adressage. Il consiste en fait à scruter une fenêtre temporelle bien précise correspondant au numéro affecté à l'interface.

L'émetteur-récepteur 51 est validé par le signal VALn aussi longtemps que l'interface In est adressée, avec une période de trame de décalage (voir figure 2.). L'émetteur-récepteur 51 est commandé par le signal R/W synchronisé avec l'horloge trame SY.

Lorsque l'interface In est en réception, les données véhiculées sur le canal de transmission 14 sont dirigées vers l'interface de ligne 53 via le buffer 52. L'interface de ligne 53 peut par exemple être raccordée à un poste téléphonique 55 via une liaison bifilaire 54. Tout autre type de terminal convient également.

Lorsque le dispositif de l'invention est en mode lecture, les données peuvent être acheminées du terminal 55 vers l'unité de gestion 10.

Le buffer 52 sert à mémoriser des données à transmettre de l'unité de gestion 10 vers le terminal 55 ou du terminal 55 vers l'unité de gestion 10. Ce buffer permet d'adapter les débits de données.

Le numéro programmé dans l'interface est mémorisé dans des moyens de mémorisation non représentés coopérant avec le compteur-comparateur 50 pour permettre l'échantillonnage du signal d'adressage pendant l'intervalle de temps correspondant à ce numéro.

La programmation des interfaces peut être réalisée par logiciel, par exemple à l'initialisation du dispositif, grâce à un bus non représenté du type Ethernet.

Cette programmation peut également être du type physique, c'est-à-dire que chaque interface comporte des interrupteurs du type DIL permettant de distinguer chacune des interfaces. Les moyens de mémorisation du numéro affecté à chaque interface ne sont dès lors plus nécessaires puisqu'il suffit de lire la configuration des interrupteurs pour connaître le numéro d'une interface.

Le dispositif de l'invention peut donc fonctionner en écriture et en lecture. Il est bien entendu possible de ne conserver qu'un sens de transmission des informations unité de gestion vers l'interface. Ce mode de réalisation présente l'avantage de ne nécessiter que des récepteurs au niveau des interfaces et aucun protocole de communication puisque l'ensemble du dispositif fonctionne de façon synchrone. Il est également possible d'établir une liaison bidirectionnelle à l'aide d'un bus supplémentaire sur lequel se ferait le protocole de demande d'écriture.

Un autre mode de mise en oeuvre de l'invention consiste à gérer la liaison d'adresse et le bus de données pour envoyer des données à un périphérique dès l'intervalle de temps suivant son adressage. On obtient un gain de temps appréciable impliquant cependant une gestion plus complexe du dispositif.

Le canal de transmission de données est découpé en un nombre d'intervalles multiple de celui de la trame du signal d'adressage.

Il est en effet essentiel que les transmissions effectuées soient synchrones avec le signal d'adressage. Selon un mode de réalisation, le canal de transmission de données et le signal d'adressage sont tous deux découpés en 32 intervalles de temps (liaison MIC classique) avec une horloge bit H de 2,048 MHz. Selon un autre mode de réalisation, l'horloge bit du canal de transmission de données a une fréquence double de celle du signal d'adressage.

La présente invention s'applique de préférence à la gestion des communications entre un PABX et des postes téléphoniques et/ou télématiques via des interfaces du type In. Le dispositif de l'invention est avantageusement compris dans un PABX fonctionnant avec des liaisons MIC. L'horlogerie 42 de l'unité de gestion 10 (figure 4) peut alors ne pas être comprise dans l'unité de gestion et provenir directement de l'autocommutateur. Cet autocommutateur comporte une unité de commande centrale qui pilote les CPU 40 de chaque unité de gestion dédiée à une application spécifique. L'unité de gestion 10, peut par exemple être affectée à une application d'imagerie.

Ce mode de réalisation permet d'intégrer le dispositif de l'invention dans des systèmes déjà existants, à moindre coût et sans remettre en cause les moyens déjà utilisés.

Comme les données véhiculées sur le canal de transmission peuvent être de types très différents, l'invention peut également s'appliquer à la commande de contrôleurs d'imprimantes, de contrôleurs graphiques, etc....Les données transmises peuvent être différentes suivant le périphérique adressé et ne nécessitent pas la génération de codes identifiant le type de données envoyées, comme dans une transmission de type Ethernet.

Les données véhiculées sur le canal de transmission peuvent par exemple être des données d'image animée.

Le nombre de périphériques raccordables à la liaison unifilaire d'adresse est théoriquement illimité et la période d'une trame d'adressage peut être modifiée suivant le nombre de périphériques raccordés à l'unité centrale.

Dans l'application décrite, il est par exemple possible de doubler la fréquence d'horloge bit H pour adresser deux fois plus d'interfaces.

L'invention permet de supprimer la gestion d'un protocole sur le canal de transmission et de dédier ce canal à la transmission de données.

L'adressage réalisé par un signal multiplexé temporellement limite le câblage à un fil unique et il est possible de réaliser de l'adressage point à point et multipoints.

## Revendications

1. Procédé d'adressage de périphériques du type consistant à générer un signal d'adressage destiné à adresser au moins un périphérique, ledit signal d'adressage étant généré par une unité de gestion pilotant lesdits périphériques, caractérisé en ce qu'il consiste à attribuer, lors d'une phase de programmation, un numéro distinct à chaque périphérique (In) correspondant à un rang déterminé d'intervalles de temps composant ledit signal d'adressage, et à adresser, lors d'une phase d'adressage, les périphériques (In) dont les numéros correspondent respectivement à des créneaux temporels activés dudit signal d'adressage (Sn).

2. Procédé selon la revendication 1 caractérisé en ce que lesdits périphériques (In) sont validés pendant la durée d'une trame suivant la trame pendant laquelle ils ont été adressés.

3. Dispositif d'adressage mettant en oeuvre un procédé selon l'une quelconque des revendications 1 et 2 caractérisé en ce qu'un fil (15) d'adresse unique est relié entre ladite unité de gestion (10) et chacun desdits périphériques (In), ledit fil (15) conducteur unique véhiculant ledit signal d'adressage (Sn).

4. Dispositif selon la revendication 3 caractérisé en ce que lesdits périphériques sont des interfaces (In) entre un canal de transmission de données (14) commun auxdites interfaces (In) et des terminaux (55).

5. Dispositif selon l'une quelconque des revendications 3 et 4 caractérisé en ce que lesdits terminaux (55) sont des terminaux téléphoniques et/ou télématiques.

6. Dispositif selon l'une quelconque des revendications 3 à 5 caractérisé en ce que chacun desdits périphériques (In) comprend des moyens (50) de comparaison d'un signal (H, SY) d'horloge de référence avec ledit signal d'adressage (Sn), lesdits moyens de comparaison générant un signal de validation (VALn) lorsque ledit signal d'adressage (Sn) comporte un intervalle de temps activé correspondant audit numéro programmé.

# FIG. 1

# FIG. 2

# FIG. 3

# FIG. 4

# FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-4 024 509 (ELMER)<br>* abrégé; figures 3,4B *<br>* colonne 3, ligne 18 - ligne 31 *<br>* colonne 5, ligne 28 - ligne 68 *<br>* colonne 6, ligne 51 - colonne 7, ligne 63 *<br>* revendications 16,19 *<br>--- | 1-6 | G06F12/06 |
| Y | EP-A-0 105 755 (FUJITSU)<br>* abrégé; figure 2 *<br>* page 2, ligne 1 - ligne 22 *<br>* page 4, ligne 16 - page 6, ligne 10 *<br>* revendication 1 *<br>--- | 1,3,6 | |
| Y | EP-A-0 325 080 (IBM)<br>* abrégé; figures 1,10,12 *<br>* colonne 7, ligne 3 - ligne 28 *<br>* revendication 3 *<br>--- | 2,4,5 | |
| A | US-A-4 458 357 (WEYMOUTH ET AL)<br>* abrégé; figure 3 *<br>* colonne 2, ligne 56 - colonne 4, ligne 2 *<br>* revendication 11 *<br><br>----- | 1,3 | DOMAINES TECHNIQUES RECHERCHES (Int. Cl.5 )<br><br>G06F |

Le présent rapport a été établi pour toutes les revendications

| Lieu de la recherche | Date d'achèvement de la recherche | Examinateur |
|---|---|---|
| LA HAYE | 20 AOUT 1992 | POWELL D. |

EPO FORM 1503 03.82 (P0402)